(19) Europäisches Patentamt
European Patent Office
Office européen des brevets

(11) Numéro de publication: **0 167 450**
**B1**

# (12) FASCICULE DE BREVET EUROPEEN

(45) Date de publication du fascicule du brevet: **08.02.89**

(51) Int. Cl.⁴: **C 09 K 5/04**

(21) Numéro de dépôt: **85401304.2**

(22) Date de dépôt: **27.06.85**

(54) **Application de mélanges stables d'hydrocarbures chlorofluorés et de solvants à titre de composition calogène pour pompe à chaleur à absorption et compositions calogènes.**

(30) Priorité: **06.07.84 FR 8410813**

(43) Date de publication de la demande: **08.01.86 Bulletin 86/2**

(45) Mention de la délivrance du brevet: **08.02.89 Bulletin 89/6**

(84) Etats contractants désignés: **AT BE CH DE FR GB IT LI LU NL SE**

(56) Documents cités:
**EP-A- 0 062 516**
**EP-A- 0 084 869**
**FR-A- 2 267 148**
**GB-A- 1 399 814**

**Le dossier contient des informations techniques présentées postérieurement au dépôt de la demande et ne figurant pas dans le présent fascicule.**

(73) Titulaire: **GAZ DE FRANCE, 23, rue Philibert Delorme, F-75017 Paris (FR)**

(72) Inventeur: **Genest, Bernard, 46 rue des Orteaux, F-75020 Paris (FR)**

(74) Mandataire: **Gillard, Marie-Louise et al, Cabinet Beau de Loménie 55, Rue d'Amsterdam, F-75008 Paris (FR)**

**EP 0 167 450 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne le domaine du chauffage ou de la réfrigération utilisant des systèmes à absorption, tels que des pompes à chaleur à absorption. Elle a plus particulièrement pour objet l'application de mélanges stables hydrocarbures chlorofluorés/solvants à titre de composition calogène pour pompe à chaleur à absorption.

Les pompes à chaleur à absorption sont largement utilisées de nos jours pour le chauffage, notamment des locaux.

Le principe du cycle à absorption de ces pompes est le suivant:

Un fluide de travail ou fluide calogène (F) initialement à l'état gazeux est soumis à des étapes de condensation, de détente, de vaporisation, puis d'absorption dans un fluide solvant (S). La solution obtenue est remise sous pression et une élévation de température permet de régénérer le fluide de travail (F) à l'état gazeux; le solvant est alors renvoyé à l'étape d'absorption.

Les couples fluide de travail-fluide solvant les plus utilisés sont les couples $NH_3$–$H_2O$ et $H_2O$–LiBr. Cependant, ces couples présentent des inconvénients majeurs qui empêchent leur utilisation dans certains domaines, notamment dans le domaine du chauffage individuel ou collectif. En effet, le couple $NH_3$–$H_2O$, thermodynamiquement intéressant, a une utilisation limitée par la toxicité de $NH_3$. Le couple $H_2O$–LiBr ne peut pas être utilisé aux basses températures raquises à l'évaporateur dans le cas d'application en pompe à chaleur pour le chauffage d'habitations individuelles ou collectives à cause de la cristallisation de l'eau.

Dans un cycle à absorption, il est important que le couple fluide de travail-fluide solvant présente de bonnes propriétés thermodynamiques, une bonne solubilité du fluide de travail ou calogène dans le solvant, ne soit pas toxique et ne présente aucun risque de cristallisation.

On a déjà proposé à cet effet l'utilisation d'hydrocarbures fluorés à titre de fluides calogènes avec des composés lourds comme solvants [revue Générale de Thermique – n° 236–237 août-septembre 1981].

Le brevet EP 62.516 décrit une composition pour absorption – réfrigération comprenant un hydrocarbure fluoré comme fluide calogène, un amide ou un éther de glycol à titre de solvant et un phosphite comme agent stabilisant.

Le brevet GB 1 399 814 concerne une composition anti-oxydante comprenant du 1, 2, 3, 6, 7, 8-hexahydropyrène en combinaison avec un agent anti-oxydant connu, notamment un dialkyldithiophosphate de zinc, qui convient pour stabilister des substances organiques, telles que des huiles minérales ou des esters synthétiques, c'est-à-dire pour inhiber la dégradation oxydative de tels composés lorsqu'ils sont soumis à des températures élevées.

Le brevet FR 2 267 148 concerne un procédé pour améliorer la stabilité photochimique d'un liquide organique qui comprend la dissolution d'une proportion mineure d'un sel de nickel d'acides alkylarylsulfoniques dans ledit liquide organique. Ces sels n'affectent pas de façon génante la coloration des compositions auxquelles ils sont incorporés.

L'utilisation de ces couples fluide calogène-fluide solvant dans un cycle à absorption présente un intérêt certain, notamment en raison de la très grande solubilité du fluide calogène dans le solvant. Cependant, de tels couples se décomposent aux températures élevées lorsqu'ils sont en contact avec un composé métallique, alors que dans les mêmes conditions chaque constituant du couple est thermiquement stable. Or, il est primordial, pour une installation de chauffage comportant cun cycle à absorption, que le système fluide calogène-solvant soit stable pendant une durée équivalente à 10 ans de fonctionnement.

On a maintenant trouvé que des mélanges stables d'hydrocarbures chlorofluorés et de solvants conviennent particulièrement bien comme composition calogène pour pompes à chaleur à absorption.

Les compositions calogènes qui conviennent aux fins de l'invention sont des mélanges comprenant un hydrocarbure chlorofluoré comme fluide calogène, un composé de type amide ou éther de glycol comme solvant et un agent stabilisant choisi parmi les dialkyldithiophosphates de zinc, les sels métalliques d'acides alkylarylsulfoniques, et leurs mélanges.

Les hydrocarbures chlorofluorés appropriés aux fins de l'invention sont des hydrocarbures partiellement hydrogénés, c'est-à-dire qu'ils possèdent au moins un atome d'hydrogène et qui ont un point d'ébullition compris entre −45 °C et +60 °C.

A titre d'exemples d'hydrocarbures chlorofluorés qui peuvent être utilisés selon l'invention, on peut citer de chlorodifluorométhane, le dichlorofluorométhane, le chlorofluorométhane, le chloro-1 trifluoro-2,2,2 éthane, le dichloro-1,1 trifluoro-2,2,2 éthane, le chloro-1 tétrafluoro-1,2,2,2 éthane, le dichloro-1,1 difluoro-2,2 éthane, le chloro-1 trifluoro-1,2,2 éthane, le chloro-1 difluoro-2,2 éthane, leurs isomères et leurs mélanges. L'hydrocarbure particulièrement préféré est le chloro-1 tétrafluoro-1,2,2,2 éthane.

Le fluide solvant utilisé dans la composition calogène selon l'invention est:

– soit un composé de type amide, c'est-à-dire un composé ayant au moins une liaison N–C=O, tel que par exemple le N,N-dimé thylformamide, le N,N-diéthylformamide, le N-méthylpyrrolidone, le N,N-diméthylpropionamide et leurs mélanges, le solvant préféré étant la N-méthylpyrrolidone;

– soit un éther de glycol, tel que le diméthyléther du triéthylèneglycol ou le diméthyléther du tétraéthylèneglycol.

Le fluide solvant utilisé dans la composition selon l'invention a avantageusement une température d'ébullition supérieure d'au moins 150 °C à la température d'ébullition du fluide calogène.

Les quantités relatives de fluide calogène et de fluide solvant dans la composition selon l'invention ne sont pas critiques. Elles sont déterminée de manière connue, principalement en fonction des conditions de fonctionnement du cycle d'absorption.

Avantageusement on utilise 10 à 60 parties en poids de fluide calogène par rapport au poids du mélange total.

L'agent stabilisant mis en œuvre dans les compositions de l'invention est

– soit un dialkyldithiophosphate de zinc répondant à la formule chimique

$$(R'O)_2-\underset{\underset{S}{\|}}{P}-S-Zn-S-\underset{\underset{S}{\|}}{P}-(OR'')_2$$

dans laquelle R' et R", identiques ou différents représentent des radicaux alkyle, aryle, alkylaryle, ou arylalkyle contenant au moins 3 atomes de carbone et, de préférence au moins 6 atomes de carbone;

– soit un sel métallique d'un acide alkylarylsulfonique de formule:

$$(R_mArSO_3)_nM$$

dans laquelle R est un groupe alkyle à chaîne linéaire ou ramifiée ayant de 1 à 15 atomes de carbone, Ar est un reste aromatique à un ou plusieurs noyaux aromatiques condensés, tel que par exemple phényle, naphthyle et M est un ion métallique choisi par exemple parmi le zinc ou les métaux alcalino-terreux, m est un entier compris entre 1 et 3 et n correspond à la valence du métal.

A titre d'exemples d'agents stabilisants préférés aux fins de l'invention on citera notamment le dinonylnaphtalènesulfonate de baryum, le dodécylbenzènesulfonate de calcium, le dinonylnaphtalènesulfonate de zinc.

L'agent stabilisant mis en œuvre ne doit pas altérer les propriétés thermodynamiques du couple fluide calogène-fluide solvant.

Cependant, la quantité de cet agent stabilisant doit être suffisante pour inhiber la décomposition du couple, fluide calogène-fluide solvant à une température allant jusqu'à 180 °C.

La gamme préférée d'agent stabilisant est comprise entre 0,05 et 2,5% en poids par rapport au poids du solvant dans la composition et de préférence de 0,5 à 2%.

Le mélange d'hydrocarbures chlorofluorés et de solvants, qui convient à titre de composition calogène pour pompe à chaleur à absorption selon l'invention, est stable à hautes températures, même en contact avec les matériaux couramment utilisés pour la réalisation industrielle des machines à absorption, tels que l'acier ordinaire, l'acier inoxydable, l'aluminium et ses alliages, la fonte, le cuivre, le laiton et similaires.

Les hydrocarbures chlorofluorés utilisés selon l'invention présentent une très grande solubilité dans les solvants définis ci-dessus. En effet, sans vouloir pour autant se limiter à une théorie quelconque, on pense que l'importante solubilité est due à des liaisons hydrogène qui se forment entre l'hydrogène de l'hydrocarbure chlorofluoré partiellement hydrogéné et l'oxygène et l'azote du groupe amide ou l'oxygène du groupe éther du solvant. La liaison hydrogène est renforcée par la présence d'un atome de chlore fixé sur le même carbone que l'hydrogène dans l'hydrocarbure.

L'agent stabilisant choisi aux fins de l'invention inhibe les mécanismes complexes de décomposition thermique de ces systèmes hydrocarbure-solvant, qui sont catalysés par les métaux aux températures supérieures à 140 °C.

La présente invention concerne également, à titre de produits nouveaux, les compositions calogènes stabilisées comprenant un mélange d'un hydrocarbure chlorofluoré calogène, d'un composé amide ou éther de glycol à titre de solvant et, à titre d'agent stabilisant, d'un dialkyldithiophosphate de zinc tel que défini ci-dessus.

L'invention va être maintenant décrit plus en détail par les exemples ci-après.

Exemple 1

On a formé une composition selon l'invention en mélangeant:

5 mmoles de chloro-1 tétrafloro-1,2,2,2 éthane (dénommé ci-après R 124);

3 g de N-méthylpyrrolidone (NMP);

1,5%, par rapport au poids de NMP, de dialkyldithiophosphate de zinc (alkyle = $C_4$ à $C_8$) et on a testé la stabilité de cette composition pendant 100 h à 180 °C selon le mode opératoire suivant: le mélange a été introduit dans un tube pyrex à paroi épaisse renfermant une éprouvette métallique de 250 mg d'acier ordinaire convenablement nettoyée. Le tube a été refroidi à la température de 180 °C pendant 100 heures. Le tube a ensuite été à nouveau replongé dans de l'azote liquide, relié à une rampe à vide et ouvert à l'aide d'un dispositif approprié. Le contenu de ce tube a été récupéré sous forme liquide et gazeuse et analysé par chromatographie en phase gazeuse. On a ainsi pu déterminer le pourcentage de décomposition du fluide calogène. La perte en poids de l'éprouvette métallique n'a pas pu être mesurée étant inférieure à la sensibilité de la balance (0,1 mg).

Les résultats obtenus sont consignés dans le tableau ci-après:

Tableau I

| Température | Durée | Stabilisant nom commercial | % de décomposition du fluide calogène |
|---|---|---|---|
| 180 °C | 100 h | OLOA 267 | 0,9% |
| 180 °C | 100 h | OLOA 4269 | 0,1% |
| 180 °C | 100 h | OLOA 262 | 0,9% |

Les dialkyldithiophosphates de zinc utilisés dans cet exemple sont commercialisés par la Société ORO GIL sous la dénomination commerciale OLOA.

Exemple 2

On a répété l'exemple 1 en utilisant comme hydrocarbure fluorochloré le chloro-1 trifluoro-2,2,2 éthane et le dialkyldithiophosphate de zinc (alkyle = $C_4$ à $C_8$) comme stabilisant.

Les tests de stabilité de cette composition ont été réalisés dans les mêmes conditions qu'à l'exemple 1. Les résultats obtenus figurent dans le tableau II ci-après.

Tableau II

| Température | Durée | Stabilisant | % de décomposition |
|---|---|---|---|
| 180 °C | 100 h | OLOA 267 | $\leqslant$ 0,1% |
| 180 °C | 100 h | OLOA 4269 | $\leqslant$ 0,1% |

Les dialkyldithiophosphates de zinc utilisés dans cet exemple sont commercialisés par la Société ORO GIL sous la dénomination commerciale OLOA.

Exemple 3

On a formé une composition selon l'invention en mélangeant:

5 mmoles de chloro-1 tétrafluoro-1,2,2,2 éthane (dénommé ci-après R124)

3 g de N-méthylpyrrolidone (NMP)

1,5% par rapport au poids de NMP, d'un sel métallique d'acide alkylarylsulfonique.

Les tests de stabilité de cette composition ont été réalisés dans les mêmes conditions qu'à l'exemple 1. Les résultats obtenus figurent dans le tableau III ci-après.

Tableau III

| Couple | Température | Durée | Stabilisant | Perte de poids éprouvette métallique | % de décomposition |
|---|---|---|---|---|---|
| R124–NMP | 180 °C | 100 h | Dinonylnaphthalène-sulfonate de baryum | 0,9 mg | 1,9% |
| R124–NMP | 180 °C | 100 h | Dodécylbenzène-sulfonate de calcium | 2,6 mg | 0,7% |

Exemple 4

On a opéré comme à l'exemple 1, mais en remplaçant le dialkyldithiophosphate de zinc par la même quantité de dinonylnaphthalènesulfonate de zinc. Au terme du test de 100 heures à 180 °C le taux de décomposition du R 124 n'était que de 3,4%.

Exemple 5

On a opéré comme à l'exemple 1 sauf que l'on a remplacé, d'une part, le R 124 par 5 mmole de chloro-1 trifluoro-2,2,2 éthane (dénommé ci-après R 133a) et d'autre part le dodécylbenzène sulfonate de calcium par la même quantité de dinonylnaphtalène sulfonate de zinc.

Au terme du test de 100 heures à 180 °C le taux de décomposition du R 133a ne dépassait pas 0,9%.

Exemple comparatif

A titre de comparaison, on a préparé des compositions calogènes sans stabilisant et on a étudié leur stabilité dans les mêmes conditions que les compositions selon les exemples 1 à 5 ci-dessus.

Les résultats obtenus sont consignés dans le tableau IV ci-après:

Tableau IV

| Mélange Hydrocarbure | Solvant | Matériau | Conditions expérimentales Température °C | Durée heures | Stabilisant | % de décomposition |
|---|---|---|---|---|---|---|
| R124 | NMP | acier inoxydable | 180 °C | 100 | sans | 71% |
| R133a | NMP | acier inoxydable | 180 °C | 100 | sans | 93% |
| R124 | NMP | acier ordinaire | 180 °C | 100 | sans | 55% |
| R133a | NMP | acier ordinaire | 180 °C | 100 | sans | 76% |

R124 = chloro-1 tétrafluoro-1,2,2,2 éthane $CF_3-CHFCl$
R133a = chloro-1 trifluoro-2,2,2 éthane $CF_3-CH_2Cl$

Les résultats consignés dans les tableaux I à IV ci-dessus montrent que les compositions selon l'invention sont thermiquement stables.

**Revendications**

1. Application à titre de composition calogène pour pompe à chaleur à absorption des mélanges stables d'hydrocarbures chlorofluorés et de solvants, lesdits mélanges comprenant un hydrocarbure chlorofluoré calogène, un composé amide ou éther de glycol, à titre de solvant et un agent stabilisant choisi parmi:

1) les dialkyldithiophosphates de zinc de formule chimique

$$(R'O)_2-\underset{\underset{S}{||}}{P}-S-Zn-S-\underset{\underset{S}{||}}{P}-(OR'')_2$$

dans laquelle R' et R'', identiques ou différents représentent des radicaux alkyle, aryle, alkylaryle ou arylalkyle contenant au moins 3 atomes de carbone et de préférence au moins 6 atomes de carbone, ou

2) les sels métalliques d'acides alkylarylsulfoniques de formule:

$$(R_mAr\,SO_3)_nM$$

dans laquelle R est un groupe alkyle ayant de 1 à 15 atomes de carbone, Ar est un groupe aryle, M est un ion métallique, de préférence zinc ou alcalino-terreux, $\underline{m}$ est un entier compris entre 1 et 3 et $\underline{n}$ est un entier qui correspond à la valence du métal.

2. Application selon la revendication 1, caractérisée en ce que l'hydrocarbure chlorofluoré est choisi parmi le chlorodifluorométhane, le dichlorofluorométhane, le chlorofluorométhane, le dichloro-1,1 trifluoro-2,2,2 éthane, le chloro-1 tétrafluoro-1,2,2,2 éthane, le dichloro-1,1 difluoro-2,2 éthane, le chloro-1 trifluoro-2,2,2 éthane et le chloro-1 difluoro-2,2 éthane, le chloro-1 trifluoro-1,2,2 éthane.

3. Application selon l'une des revendications 1 ou 2, caractérisée en ce que le composé amide solvant est choisi parmi le N,N-diméthylformamide, le N,N-diéthylformamide, la N-methylpyrrolidone, le N,N-diméthylpropionamide et leurs mélanges.

4. Application selon l'une des revendications 1 ou 2, caractérisée en ce que le solvant est choisi parmi le diméthyléther du triéthylèneglycol ou le diméthyléther du tétraéthylèneglycol.

5. Application selon l'une quelconque des revendications 1 à 4, caractérisée en ce que ledit mélange stable contient 0,05 à 2,5% en poids de l'agent stabilisant par rapport au poids du solvant et de préférence de 0,5 à 2%.

6. Application selon l'une quelconque des revendications 1 à 5, caractérisée en ce que dans ledit mélange stable le fluide calogène est le chloro-1 tétrafluoro-1,2,2,2 éthane, le fluide solvant est la N-méthylpyrrolidon et l'agent stabilisant est un dialkyldithiophosphate de zinc, le groupe alkyle étant en $C_4-C_8$.

7. Application selon l'une quelconque des revendications 1 à 5, caractérisée en ce que dans ledit mélange stable le fluide calogène est le chloro-1 tétrafluoro-1,2,2,2 éthane, ou le chloro-1 trifluoro-2,2,2 éthane, le fluide solvant est la N-méthylpyrrolidone et l'agent stabilisant est le dinonylnaphthalène sulfonate de baryum ou de zinc ou le dodécylbenzène-sulfonate de calcium.

8. Application selon l'une quelconque des revendications 1 à 7, caractérisée en ce que dans ledit mélange stable la proportion d'hydrocarbure chlorofluoré est de 10 à 60% par rapport au poids du mélange.

9. Compositions calogènes caractérisées en ce qu'elles sont constituées de mélanges stables d'hydrocarbures chlorofluorés et de solvants, lesdits mélanges comprenant un hydrocarbure chlorofluoré calogène, un composé amide ou éther de glycol, à titre de solvant et un agent stabilisant choisi parmi:

les dialkyldithiophosphates de zinc de formule chimique

$$(R'O)_2-\underset{\underset{S}{\|}}{P}-S-Zn-S-\underset{\underset{S}{\|}}{P}-(OR'')_2$$

dans laquelle R' et R'', identiques ou différents représentent des radicaux alkyle, aryle, alkylaryle ou arylalkyle contenant au moins 3 atomes de carbone et de préférence au moins 6 atomes de carbone.

10. Composition calogène selon la revendication 9, caractérisée en ce que ledit mélange stable contient 0,05 à 2,5% en poids de l'agent stabilisant par rapport au poids du solvant et de préférence de 0,5 à 2%.

11. Composition calogène selon l'une des revendications 9 ou 10, caractérisée en ce que, dans ledit mélange stable la proportion d'hydrocarbure chlorofluoré est de 10 à 60% par rapport au poids du mélange.

**Patentenanaprüche**

1. Anwendung von stabilen Mischungen aus Chlorfluorkohlenwasserstoffen und Lösungsmitteln als Wärmeträger-Zusammensetzung für Absorptions-Wärmepumpen, welche Mischungen einen Chlorfluorkohlenwasserstoff als Wärmeträger, eine Amid- oder Glykoletherverbindung als Lösungsmittel und ein Stabilisierungsmittel, ausgewählt aus:

1) Zink-Dialkyldithiophosphaten der chemischen Formel

$$(R'O)_2-\underset{\underset{S}{\|}}{P}-S-Zn-S-\underset{\underset{S}{\|}}{P}-(OR'')$$

worin R' und R'', gleich oder verschieden, Alkyl-, Aryl-, Alkylaryl- oder Arylalkylreste mit mindestens 3 Kohlenstoffatomen, vorzugsweise mindestens 6 Kohlenstoffatomen darstellen, oder

2) Alkylarylsulfonsäure-Metallsalzen der Formel

$$(R_mAr\,SO_3)_nM$$

worin R eine Alkylgruppe mit 1 bis 15 Kohlenstoffatomen ist, Ar eine Arylgruppe darstellt, M ein Metallion, vorzugsweise Zink oder Erdalkali bedeutet, m eine ganze Zahl zwischen 1 und 3 ist und n eine ganze Zahl ist, die der Wertigkeit des Metalls entspricht, umfassen.

2. Anwendung nach Anspruch 1, dadurch gekennzeichnet, dass der Chlorfluorkohlenwasserstoff ausgewählt ist aus Chlordifluormethan, Dichlorfluormethan, Chlorfluormethan, 1,1-Dichlor-2,2,2-trifluorethan, 1-Chlor-1,2,2,2-tetrafluorethan, 1,1-Dichlor-2,2-difluorethan, 1-Chlor-2,2,2-trifluorethan und 1-Chlor-2,2-difluorethan, 1-Chlor-1,2,2-trifluorethan.

3. Anwendung nach einem der Ansprüche 1 oder 2, dadurch gekennzeichnet, dass die Lösungsmittel-Amidverbindung ausgewählt ist aus N,N-Dimethylformamid, N,N-Diethylformamid, N-Methylpyrrolidon, N,N-Dimethylpropionamid und Mischungen davon.

4. Anwendung nach einem der Ansprüche 1 oder 2, dadurch gekennzeichnet, dass das Lösungsmittel ausgewählt ist aus Triethylenglykoldimethylether oder Tetraethylenglykoldimethylether.

5. Anwendung nach einem der Ansprüche 1 bis 4, dadurch gekennzeichnet, dass die stabile Mischung 0,05 bis 2,5 Gew.-% Stabilisierungsmittel, bezogen auf das Gewicht des Lösungsmittels, vorzugsweise 0,5 bis 2%, enthält.

6. Anwendung nach einem der Ansprüche 1 bis 5, dadurch gekennzeichnet, dass das Wärmeträgerfluid in der stabilen Mischung 1-Chlor-1,2,2,2-tetrafluorethan, das Lösungsmittelfluid N-Methylpyrrolidon und das Stabilisierungsmittel ein Zink-Dialkylthiophosphat ist, wobei die Alkylgruppe $C_4$–$C_8$ ist.

7. Anwendung nach einem der Ansprüche 1 bis 5, dadurch gekennzeichnet, dass das Wärmeträgerfluid in der Mischung 1-Chlor-1,2,2,2-tetrafluorethan oder 1-Chlor-2,2,2-trifluorethan, das Lösungsmittelfluid N-Methylpyrrolidon und das Stabilisierungsmittel Barium- oder Zink-Dinonylnaphthalinsulfonat oder Kalzium-Dodecylbenzolsulfonat ist.

8. Anwendung nach einem der Ansprüche 1 bis 7, dadurch gekennzeichnet, dass der Anteil an Chlorfluorkohlenwasserstoff in der stabilen Mischung 10 bis 60%, bezogen auf das Gewicht der Mischung, beträgt.

9. Wärmeträger-Zusammensetzungen, dadurch gekennzeichnet, dass sie aus stabilen Mischungen von Chlorfluorkohlenwasserstoffen und Lösungsmitteln bestehen, welche Mischungen einen Chlorfluorkohlenwasserstoff als Wärmeträger, eine Amid- oder Glykoletherverbindung als Lösungsmittel und ein Stabilisierungsmittel, ausgewählt aus

Zink-Dialkyldithiophosphaten der chemischen Formel

$$(R'O)_2-\underset{\underset{S}{\|}}{P}-S-Zn-S-\underset{\underset{S}{\|}}{P}-(OR'')_2$$

worin R' und R", gleich oder verschieden, Alkyl-, Aryl-, Alkylaryl- oder Arylalkylreste mit mindestens 3 Kohlenstoffatomen, vorzugsweise mindestens 6 Kohlenstoffatomen, darstellen, umfassen.

10. Wärmeträger-Zusammensetzung nach Anspruch 9, dadurch gekennzeichnet, dass die stabile Mischung 0,05 bis 2,5 Gew.-% Stabilisierungsmittel, bezogen auf das Gewicht des Lösungsmittels, vorzugsweise 0,5 bis 2%, enthalten.

11. Wärmeträger-Zusammensetzung nach einem der Ansprüche 9 oder 10, dadurch gekennzeichnet, dass der Anteil an Chlorfluorkohlenwasserstoff in der stabilen Mischung 10 bis 60%, bezogen auf das Gewicht der Mischung, beträgt.

## Claims

1. Application of stable mixtures of chlorofluorohydrocarbons and solvents as heat transfer compositions for absorption heat pumps, the said mixtures comprising a heat transfer chlorofluorohydrocarbon, an amide or glycol ether compound as a solvent, and a stabilizer chosen from the group consisting of:

1) zinc dialkyl-dithiophosphates of the chemical formula:

$$(R'O)_2-\underset{\underset{S}{\|}}{P}-S-Zn-S-\underset{\underset{S}{\|}}{P}-(OR'')_2$$

in which R' and R", which are identical or different, represent alkyl, aryl, alkylaryl or arylalkyl radicals containing at least 3 carbon atoms and preferably at least 6 carbon atoms, and

2) metal salts of alkylarylsulfonic acids, of the formula:

$$(R_mArSO_3)_nM$$

in which R is an alkyl group having from 1 to 15 carbon atoms, Ar is an aryl group, M is a metal ion, preferably zinc or an alkaline earth metal, m is an integer between 1 and 3 and n is an integer which corresponds to the valency of the metal.

2. Application according to claim 1, characterized in that the chlorofluorohydrocarbon is chosen from the group consisting of chlorodifluoromethane, dichlorofluoromethane, chlorofluoromethane, 1,1-dichloro-2,2,2-trifluoroethane, 1-chloro-1,2,2,2-tetrafluoroethane, 1,1-dichloro-2,2-difluoroethane, 1-chloro-2,2,2-trifluoroethane, 1-chloro-2,2-difluoroethane and 1-chloro-1,2,2-trifluoroethane.

3. Application according to one of claims 1 or 2, characterized in that the amide compound used as a solvent is chosen from the group consisting of N,N-dimethylformamide, N,N-diethylformamide, N-methylpyrrolidone, N,N-dimethylpropionamide and mixtures thereof.

4. Application according to one of claims 1 or 2, characterized in that the solvent is chosen from the group consisting of triethylene glycol dimethyl ether or tetraethylene glycol dimethyl ether.

5. Application according to any one of claims 1 to 4, characterized in that the said stable mixture contains 0.05 to 2.5% by weight of the stabilizer, relative to the weight of the solvent, and preferably from 0.5 to 2%.

6. Application according to any one of claims 1 to 5, characterized in that the heat transfer fluid in the said stable mixture is 1-chloro-1,2,2,2-tetrafluoroethane, the solvent fluid is N-methylpyrrolidone and the stabilizer is a zinc dialkyl-dithiophosphate, the alkyl group being $C_4$–$C_8$.

7. Application according to any one of claims 1 to 5, characterized in that the heat transfer fluid in the said stable mixture is 1-chloro-1,2,2,2-tetrafluoroethane or 1-chloro-2,2,2-trifluoroethane, the solvent fluid is N-methylpyrrolidone and the stabilizer is barium or zinc dinonylnaphthalenesulfonate or calcium dodecylbenzenesulfonate.

8. Application according to any one of claims 1 to 7, characterized in that the proportion of chlorofluorohydrocarbon in the said stable mixture is 10 to 60%, relative to the weight of the mixture.

9. Heat transfer compositions characterized in that they consist of stable mixtures of chlorofluorohydrocarbone and solvents, the said mixtures comprising a heat transfer chlorofluorohydrocarbon, an amide or glycol ether compound as a solvent, and as stabilizer a zinc dialkyl-dithiophosphate of the chemical formula:

$$(R'O)_2-\underset{\underset{S}{\|}}{P}-S-Zn-S-\underset{\underset{S}{\|}}{P}-(OR'')_2$$

in which R' and R", which are identical or different, represent alkyl, aryl, alkylaryl or arylalkyl radicals containing at least 3 carbon atoms and preferably at least 6 carbon atoms.

10. Heat transfer composition according to claim 9, characterized in that the said stable mixture contains 0.05 to 2.5% by weight of the stabilizer, relative to the weight of the solvent, and preferably from 0.5 to 2%.

11. Heat transfer composition according to one of claims 9 or 10, characterized in that the proportion of chlorofluorohydrocarbon in the said stable mixture is 10 to 60%, relative to the weight of the mixture.